# DEMANDE DE BREVET EUROPEEN

(11) **EP 1 402 806 A1**
(43) Date de publication de la demande: **31.03.2004**
(21) Numéro de dépôt: 03356140.8
(22) Date de dépôt: 26.09.2003
(51) Int. Cl.: A47J 39/00, A47F 10/06, H05B 1/02, H05B 3/68

(54) **Dispositif de stockage temporaire de plats cuisinés et procédé pour sa mise en oeuvre**

(30) Priorité: 30.09.2002 FR 0212081
(71) Demandeur: Electronica, 91240 St Michel sur Orge (FR)
(72) Inventeur: Roussin, Christian, 03200 Vichy (FR)
(74) Mandataire: Myon, Gérard

(57) **Abrégé**

Ce dispositif de stockage temporaire de plats cuisinés comprend:
- une enceinte (1) calorifugée équipée de moyens (9) de chauffage;
- au moins un moyen (9) de chauffage individuel d'un plat (16) disposé dans ladite enceinte (1)
- au moins un capteur (18) de température individuel apte à déterminer la température du plat (16) dans cette enceinte (1) et
- des moyens (12) de commande du moyen de chauffage (9) en fonction du signal de sortie du capteur (18).

Un tel dispositif est particulièrement destiné au maintien à des températures différentes des plateaux repas transportés dans une enceinte calorifugée (1).

## Description

L'invention a trait à un dispositif de stockage temporaire de plats cuisinés et à un procédé pour sa mise en oeuvre.

Dans le domaine de la restauration collective, on connaît des dispositifs de stockage de plats cuisinés comprenant une enceinte calorifugée mobile destinée au transport en température de plateaux repas. Une telle enceinte fermée comprend, notamment, une série de supports plans horizontaux superposés et régulièrement espacés. Ces supports sont réalisés de manière à offrir une résistance thermique la plus faible possible. Il s'agit, par exemple de grilles ou de fines plaques métalliques. Dans certains dispositifs, l'ensemble du volume intérieur de l'enceinte est chauffé à une température prédéterminée, par exemple de l'ordre de 65°C, ce qui n'est pas adapté à un grand nombre de plateaux repas qui comprennent des aliments à consommer à température ambiante, voire frais, tels que le pain ou les produits laitiers. Dans certains autres dispositifs, chaque support incorpore, sous sa surface destinée à recevoir le plateau repas, un dispositif de chauffage, par exemple une résistance électrique. Ainsi, un support peut être équipé de plusieurs résistances électriques indépendantes fonctionnant chacune, si besoin est, à une température prédéfinie particulière. On obtient ainsi pour un même support plusieurs zones de chauffe différentes, éventuellement matérialisées par des cloisons verticales de faible hauteur disposées sur la partie portante du support. De tels dispositifs sont de type « tout ou rien » c'est-à-dire que lorsqu'ils sont en fonctionnement, ils maintiennent une température voisine de 65°C sur la partie du support concernée, indépendamment de la température du plat à chauffer. Ainsi, au bout de quelque temps, par effet de conduction sur le support et par effet de convexion au sein de l'enceinte fermée, l'ensemble des plateaux repas se trouve globalement à la même température.

Par ailleurs, ces enceintes calorifugées sont souvent utilisées pour le transport de plateaux repas différents, correspondants à des menus différents destinés, par exemple, à des patients séjournant dans un établissement de santé et soumis à des régimes alimentaires spécifiques. Or, les aliments présents sur les plateaux repas, tels que des viandes, des poissons, des potages, des légumes ou des féculents, ne présentent pas la même température optimale de consommation. Le maintien à une température uniforme de l'ensemble des plateaux repas affecte ainsi les qualités organoleptiques des différents aliments présents.

Le chauffage permanent, à une température relativement élevée de l'ordre de 65°C, des différents supports engendre une consommation électrique importante. En effet, même si un support comprend plusieurs résistances électriques indépendantes commandées de manière autonome, il n'existe pas de moyen permettant de couper automatiquement le fonctionnement d'une résistance électrique lorsque aucun plateau repas n'est posé sur la partie du support chauffée par une résistance. Il est donc fréquent d'observer des parties de supports, ou des supports, vides dont les résistances sont en marche.

On connaît également, par US-A-6034355, un chariot de stockage temporaire de plats cuisinés recevant des récipients fermés. Le fond de chaque récipient est équipé d'un moyen de chauffage. Ce moyen de chauffage est mis en route selon deux allures de chauffage, faible ou forte, par des connexions électriques différenciées, en fonction du sens d'introduction du récipient dans une zone de réception individuelle.

Il n'y a pas de régulation individuelle de la température en fonction de chaque plateau repas.

C'est à ces inconvénients qu'entend plus particulièrement remédier l'invention en proposant un dispositif économique et automatique de maintien en température des plateaux repas disposés dans une enceinte calorifugée.

A cet effet, l'invention a pour objet un dispositif de stockage temporaire de plats cuisinés comprenant une enceinte calorifugée équipée de moyens de chauffage, ledit dispositif comprenant au moins un moyen de chauffage individuel d'un plat disposé dans l'enceinte, au moins un capteur de température individuel apte à déterminer la température du plat dans l'enceinte et des moyens de commande du moyen de chauffage en fonction du signal de sortie du capteur, caractérisé en ce qu'au moins un support de positionnement de plateaux repas porte, sur sa face inférieure, des antennes réceptrices en nombre égal au nombre d'emplacements de plateaux repas sur le support situé en dessous de lui, chaque antenne réceptrice étant disposée en regard d'un emplacement.

Grâce à l'invention, on réalise un chauffage automatique et personnalisé de chaque plateau repas, voire de chaque plat présent. La chaleur nécessaire au maintien en température des aliments d'un plat est ainsi optimisée par la mesure individuelle de la température de ce plat. La résistance électrique située sous le plateau repas fonctionne en conséquence pour ajuster la température optimale de consommation de l'aliment, d'où des économies en électricité pour le fonctionnement de l'enceinte.

Selon des aspects avantageux mais non obligatoires de l'invention, le dispositif de maintien en température incorpore une ou plusieurs des caractéristiques suivantes :
- Le capteur est pourvu d'une antenne émettrice apte à transmettre à une antenne réceptrice, associée aux moyens de commande, un signal dépendant de la température d'un plat.
- Le capteur de température individuel est disposé de façon amovible à proximité du plat cuisiné, sur un plateau repas. Il peut, en particulier, être monté sur un couvercle apte à recouvrir un plat en l'isolant de l'atmosphère ambiante.
- Le dispositif comprend plusieurs types de capteurs de température avec des températures de déclenchement différentes, chaque type de capteur étant repéré par une marque ou une couleur différente.
- Chaque capteur est positionné de manière à mesurer une température de l'air représentative de la température moyenne du plat.
- La paroi supérieure de l'enceinte est équipée, sur sa face inférieure, d'au moins une antenne réceptrice disposée en regard d'un emplacement du support situé en dessous de ladite paroi.

L'invention concerne également un procédé de maintien en température de plats cuisinés dans un dispositif de stockage temporaire de tels plats, caractérisé en ce qu'il comprend des étapes consistant à :
- mesurer individuellement une température représentative de la température moyenne d'un plat cuisiné disposé sur un support dans une enceinte calorifugée du dispositif à l'aide d'un capteur pourvu d'une antenne émettrice,
- transmettre le résultat de la mesure à une antenne réceptrice située sur la face inférieure d'un autre support, ou de la paroi supérieure de l'enceinte, situé directement au dessus du plat, ladite antenne étant reliée à un moyen de régulation apte à commander un moyen de chauffage individuel du plat cuisiné, et
- commander le moyen de chauffage individuel en fonction du résultat de la mesure.

L'invention sera mieux comprise et d'autres avantages de celle-ci apparaîtront plus clairement à la lumière de la description qui va suivre d'un mode de réalisation d'un dispositif conforme à l'invention et de son procédé de mise en oeuvre, donnée uniquement à titre d'exemple et faite en référence aux dessins annexés dans lesquels :
- la figure 1 est une vue générale en perspective d'une enceinte calorifugée destinée au transport de plats cuisinés et pourvue d'un dispositif de maintien en température, la ou les portes de l'enceinte n'étant pas représentées et certaines parties étant arrachées ;

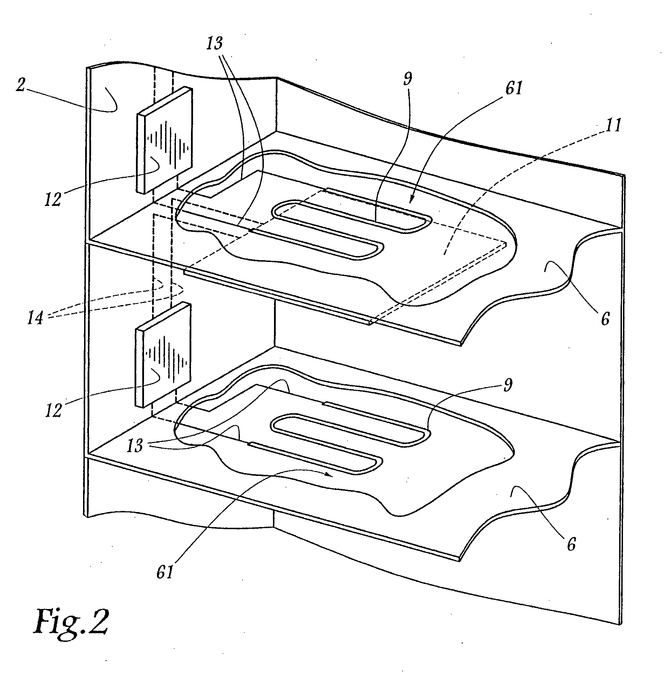

- la figure 2 est une vue partielle, en perspective et à plus grande échelle, de l'enceinte représentée à la figure 1 et ;
- la figure 3 est une vue en perspective, avec arrachement partiel, d'un plateau repas utilisé avec l'enceinte des figures 1 et 2.

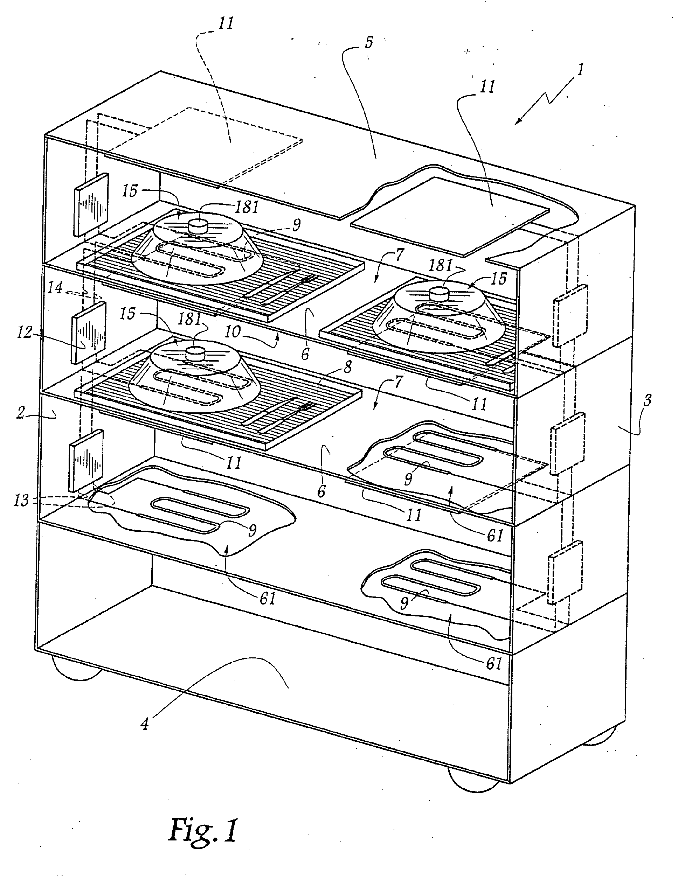

L'enceinte calorifugée 1 représentée à la figure 1 se présente sous la forme d'une structure globalement parallélépipédique mobile grâce à des roulettes. Les deux grands côtés 2 et 3 verticaux et parallèles sont reliés, en partie basse, par un fond 4 plan, horizontal et de forme rectangulaire supportant à chacun de ses coins une roulette.

En partie supérieure, les côtés 2 et 3 sont reliés par une paroi supérieure ou dessus 5 également rectangulaire, plane et horizontale disposée parallèlement au fond 4.

Des supports 6, plans et horizontaux, sont disposés entre les éléments 4 et 5 et parallèlement à ceux-ci. Ces supports 6 relient les grands côtés 2 et 3 auxquels ils sont fixés. Ils sont régulièrement espacés sur toute la hauteur de l'enceinte 1 représentée globalement par la longueur des côtés 2 et 3.

Les côtés 2, 3, 4 et 5, ainsi que le fond et les portes de l'enceinte, sont réalisés de manière à être des isolants thermiques.

Chaque support 6 comprend une face supérieure 7 sur laquelle repose un ou des plateaux repas 8. Chaque support 6 comprend, dans son épaisseur, des résistances électriques 9 régulièrement espacées de manière à se trouver globalement situées, chacune, sous une zone 61 recevant un plateau repas 8. Les supports 6 sont réalisés de manière à être de bons conducteurs thermiques au niveau des résistances 9.

Sur sa face inférieure 10, chaque support 6 est pourvu de plusieurs antennes réceptrices 11 associées à des moyens de régulation. Ces antennes 11, réalisées par exemple par sérigraphie, sont régulièrement espacées sur le support 6 de manière à se trouver, elles aussi, globalement au niveau d'une zone du support 6 destinée à recevoir un plateau repas 8. Ainsi, chaque antenne 11 d'un support 6 est disposée globalement au dessus de l'emplacement 61 d'un plateau repas 8 situé sur le support 6 disposé en dessous . La paroi supérieure 5 comprend également une série d'antennes 11 régulièrement disposées au dessus du support 6 supérieur. Ces antennes 11 sont disposées sur la face inférieure du dessus 5, de manière analogue aux antennes 11 disposées sur les faces 10 des supports 6. Cette paroi supérieure 5 est, en revanche, dépourvue de résistances électriques 9.

Les grands côtés 2 et 3 sont équipés, au niveau de la jonction avec un support 6, de boîtiers d'alimentation et de régulation électronique 12. Chaque boîtier 12 est relié, d'une part, par des conducteurs électriques 13 aux résistances 9 situées dans le support 6 adjacent et, d'autre part, par des conducteurs électriques 14 aux antennes 11 situées sur la face 10 du support 6 immédiatement supérieur. Le boîtier 12 situé à l'extrémité supérieure de l'enceinte 1 est relié, pour sa part, par des conducteurs électriques 14 aux antennes 11 disposées sous le dessus 5.

On définit pour chacun des emplacements 61 de plateaux 8, un « couple », composé d'une résistance électrique 9 et d'une antenne réceptrice 11, située globalement dans la zone du support 6 destinée à recevoir sur sa face 7 un plateau repas 8 et au-dessus de celle-ci.

Chaque plateau repas 8 reçoit au moins une assiette 81 dans laquelle est disposé un plat cuisiné 16 formé d'un ou plusieurs aliments. Un couvercle de protection 15 est positionné au-dessus de chaque assiette 81 et permet de protéger et d'isoler thermiquement le plat 16. Ce couvercle de protection 15 a globalement la forme d'un cône tronqué dont la grande base circulaire prend appui sur le plateau repas ou sur l'assiette. La surface plane 17, constituant la petite base circulaire de ce cône tronqué, porte un capteur 18 de la température régnant dans le volume intérieur du couvercle 15. Ce capteur comprend une partie 181 dépassant de la surface 17 vers le haut et formant une antenne émettrice apte à transmettre un signal à l'antenne réceptrice 11 la plus proche. Le capteur 18 se prolonge, de l'autre côté de la surface 17, dans le volume intérieur du couvercle 15 et en direction du plat 16, par une partie 182 pourvue de moyens de détection de la température et apte à commander l'émission par la partie 181 d'un signal.

En fonctionnement, un capteur 18, situé au-dessus d'un plat 16 envoie, à l'antenne 11 située au-dessus de lui, une information concernant la température de ce plat. Cette antenne 11 communique par le conducteur électrique 14 avec le boîtier de régulation 12, situé près du support 6 supportant le plateau repas 8 concerné, de manière à gérer la résistance électrique 9 associée à ce plateau repas 8.

Plus précisément, le capteur de température effectue une mesure en continu de la température de l'air à proximité d'un plat 16, c'est-à-dire dans le volume intérieur du couvercle 15 associé. Cette mesure reflète globalement la température moyenne des aliments de ce plat 16. La partie électronique du capteur est réglée sur une température prédéfinie correspondant à une température optimale de consommation des aliments d'un plat 16 donné. Lorsque la température mesurée est inférieure à cette température prédéfinie, l'électronique du capteur émet un signal en direction de l'antenne 11. Celle-ci déclenche alors, via le boîtier 12, la mise en route de la résistance 9 située sous le plateau repas 8 comportant le plat 16 dont on vient de mesurer la température. Lorsque cette dernière atteint la valeur prédéfinie, l'électronique du capteur transmet l'information à l'antenne 11 qui, toujours via le boîtier 12, provoque l'arrêt de la résistance électrique 9. Lorsqu'il n'y a pas de couvercle 15 sur un support 6, il ne peut y avoir déclenchement par l'antenne 11, située sur le support supérieur, de la résistance électrique 9 du support inférieur. On aura donc, soit lorsque l'enceinte 1 n'est pas entièrement remplie, soit lorsque l'on retire un plateau repas 8 pour le distribuer, un arrêt du fonctionnement de la résistance électrique 9 concernée et, par conséquent, une diminution de la consommation électrique.

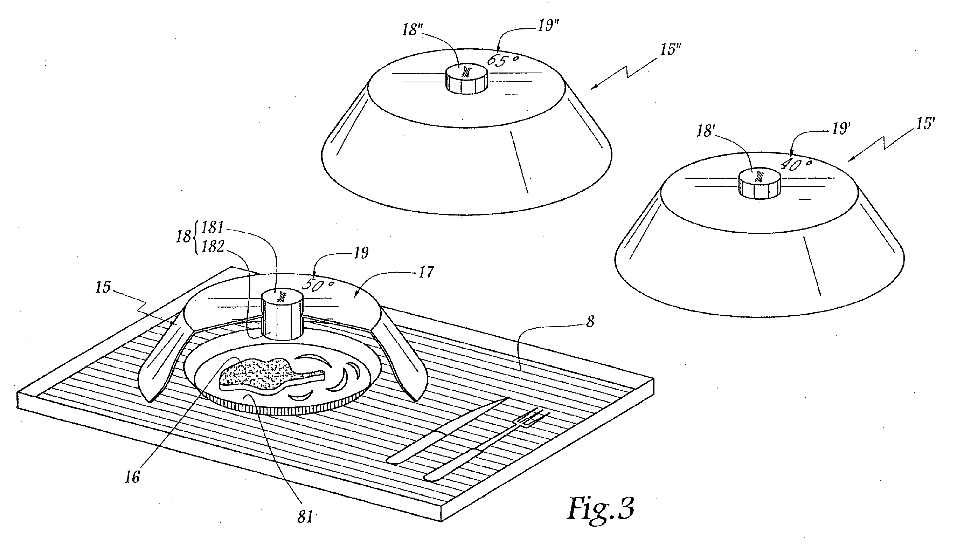

Comme on peut aisément prédéfinir des températures « de seuil de déclenchement» des capteurs 18, il est facile d'avoir un jeu de plusieurs couvercles 15 munis de capteurs avec des températures prédéfinies différentes qui permettent de maintenir des plats 16 à différentes températures. On obtient ainsi une individualisation du chauffage pour chaque zone d'un support 6 accueillant un plateau repas 8. Comme représenté de façon schématique à la figure 3, il suffit pour cela de disposer de couvercles 15, 15', 15", dont les capteurs 18, 18' et 18" ont des températures de consigne prédéfinies et distinctes et aisément identifiables, avec l'inscription 19, 19' ou 19" de ces températures sur le couvercle, avec un pictogramme, avec une représentation de l'aliment associé à cette température de consommation ou avec des couleurs différentes.

Si l'on désire distribuer un plateau repas à température ambiante, il suffit de ne pas poser de couvercle 15 au-dessus d'un aliment 16 ou d'utiliser un couvercle dépourvu de capteur 18. On peut utiliser pour les capteurs 18, soit un capteur de température de type passif, c'est-à-dire consistant en un circuit résonnant ne consommant pas d'énergie, soit un capteur comprenant une puce électronique.

Selon une variante non représentée de l'invention et pour autant que les résistances 9 et les antennes 11 sont prévues en nombre suffisant et disposées de façon adéquate, plusieurs plats 16 disposés sur un même plateau 8, recouverts par des couvercles 15 portant des capteurs 18 de températures de seuil différentes, peuvent être conservés à des températures différentes dans l'enceinte 1.

Selon une autre variante non représentée de l'invention, on dispose le capteur de température non plus dans le couvercle 15, mais de manière fixe ou mobile sur le plateau repas 8. Il peut, par exemple, s'agir de cylindres de couleur à placer sur chaque plateau 8 à proximité d'un plat à chauffer, chaque couleur de cylindre correspondant à une température de consigne.

Selon une autre variante non représentée, on dispose une antenne 11 sur la face supérieure d'un support 6 comprenant une résistance 9 commandée par un boîtier 12 en fonction du signal reçu par cette même antenne 11.

Dans un mode de réalisation différent, on positionne les boîtiers de commande 12 sur un seul des grands côtés 2 ou 3 ou à un autre endroit dans l'enceinte, par exemple sur le fond ou l'arrière de l'enceinte 1 ou sur une face de chaque support 6.

Selon une variante non représentée de l'invention, les plateaux introduits dans l'enceinte peuvent être équipés de cloisons verticales, ce qui permet de limiter les échanges thermiques selon des directions horizontales. On peut ainsi avoir plusieurs zones à des températures différentes sur un même plateau.

Un tel dispositif permet de maintenir à des températures différentes dans une même enceinte plusieurs plateaux repas, voire plusieurs plats d'un plateau, tout en fournissant un système automatique d'arrêt et de mise en oeuvre du chauffage du plateau repas.

## Revendications

1. Dispositif de stockage temporaire de plats cuisinés comprenant une enceinte (1) calorifugée équipée de moyens de chauffage, ledit dispositif comprenant au moins un moyen (9) de chauffage individuel d'un plat (16) disposé dans ladite enceinte, au moins un capteur de température individuel (18) apte à déterminer la température dudit plat dans ladite enceinte et des moyens (12) de commande dudit moyen de chauffage en fonction du signal de sortie dudit capteur, **caractérisé en ce qu'**au moins un support (6) de positionnement de plateaux repas (8) porte, sur sa face inférieure (10), des antennes réceptrices (11) en nombre égal au nombre d'emplacements (61) de plateaux repas (8) sur le support (6) situé en dessous de lui, chaque antenne réceptrice (11) étant disposée en regard d'un emplacement (61) .

2. Dispositif selon la revendication 1, **caractérisé en ce que** ledit capteur (18) est pourvu d'une antenne émettrice (181) apte à transmettre à une antenne réceptrice (11), associée auxdits moyens de commande (12), un signal dépendant de la température d'un plat (16).

3. Dispositif selon l'une des revendications précédentes, **caractérisé en ce que** ledit capteur (18) est disposé de façon amovible à proximité dudit plat (16), sur un plateau repas (8).

4. Dispositif selon la revendication 3, **caractérisé en ce que** ledit capteur est monté sur un couvercle (15) apte à recouvrir un plat (16) en l'isolant de l'atmosphère ambiante.

5. Dispositif selon l'une des revendications 3 ou 4, **caractérisé en ce qu'**il comprend plusieurs types de capteurs de température (18, 18', 18") avec des températures de déclenchement différentes.

6. Dispositif selon la revendication 5, **caractérisé en ce que** chaque type de capteur est repéré par une marque (19, 19', 19") ou une couleur différente.

7. Dispositif selon l'une des revendications précédentes, **caractérisé en ce que** ledit capteur (18) est positionné de manière à mesurer une température de l'air représentative de la température moyenne du plat(16).

8. Dispositif selon l'une des revendications précédentes, **caractérisé en ce que** la paroi supérieure (5) de l'enceinte (1) est équipé, sur sa face inférieure, d'au moins une antenne réceptrice (11) disposée en regard d'un emplacement (61) du support (6) situé en dessous de ladite paroi.

9. Procédé de maintien en température de plats cuisinés dans un dispositif de stockage temporaire de tels plats, **caractérisé en ce qu'**il comprend des étapes consistant à :
- mesurer individuellement (182) une température représentative de la température moyenne d'un plat cuisiné (16) disposé sur un support dans une enceinte calorifugée (1) dudit dispositif à l'aide d'un capteur (18) pourvu d'une antenne émettrice (181),
- transmettre le résultat (181, 11) de la mesure à une antenne réceptrice (11) située sur la face inférieure (10) d'un autre support (6) ou de la paroi supérieure (5) de l'enceinte (1), situé directement au dessus du plat (16), ladite antenne étant reliée à un moyen de régulation (12) apte à commander un moyen de chauffage (9) individuel dudit plat, et
- commander (12) ledit moyen de chauffage en fonction du résultat de la mesure.
